# EUROPÄISCHE PATENTANMELDUNG

(11) **EP 0 884 130 A2**
(43) Veröffentlichungstag der Anmeldung: **16.12.1998**
(21) Anmeldenummer: 98110115.7
(22) Anmeldetag: 03.06.1998
(51) Int. Cl.: B23P 15/02, F03B 3/12, F01D 5/00

(54) **Bauteile für Strömungsmachinen**

(30) Priorität: 14.06.1997 DE 19725251
(71) Anmelder: Voith Hydro GmbH & Co. KG, 89522 Heidenheim (DE)
(72) Erfinder: Simon, Frank, Dr., 89522 Heidenheim (DE)
(74) Vertreter: Dr. Weitzel & Partner

(57) **Zusammenfassung**

Die Erfindung betrifft Verfahren zum Herstellen eines Bauteiles für eine hydraulische Maschine, z. B. einer Schaufel für eine Turbine;
wobei eine strömungsführende Fläche durch spanabhebende, abtragende oder umformende Formgebung bearbeitet oder beschichtet wird;
wobei als Werkzeug ein Werkzeug verwendet wird, das in der bearbeiteten Fläche streifenförmige Bearbeitungsspuren (sogenannte Riblets) hinterläßt;
wobei das Bearbeitungswerkzeug derart geführt wird, daß die Bearbeitungsspuren entlang der Stromlinien verlaufen;
wobei wenigstens ein wesentlicher Teil der strömungsführenden Fläche frei von einer Nachbearbeitung bleibt.

## Beschreibung

Die Erfindung betrifft ganz allgemein Bauteile für Strömungsmaschinen, insbesondere Schaufeln fuhr Wasserturbinen, Pumpen oder andere Strömungsmaschinen, aber auch Schiffspropeller, wie z. B. Voith-Schneider-Propeller und Axialventilatoren.

Wasserturbinen sowie Pumpen weisen zahlreiche strömungsführende Flächen auf. Die Gestaltung dieser Flächen hat einen entscheidenden Einfluß auf das Arbeitsverhalten der Maschine, insbesondere auf deren Wirkungsgrad. Dies gilt ganz besonders für die Schaufeln von Wasserturbinen und Pumpen, aber auch Schiffspropeller, wie z. B. Voith-Schneider-Propeller und Axialventilatoren. Dabei kommt es zum einen auf die Großform der Schaufel an. Diese ist häufig räumlich gekrümmt, z. B. bei Kaplan- oder Francisturbinen. Es kommt aber auch sehr stark auf die Oberflächenbeschaffenheit an. Dabei strebt man eine möglichst geringe Rauheit an. Diese sollte so klein wie möglich sein. Deshalb werden die Oberflächen von Turbinenschaufeln von alters her so weit wie möglich geglättet. Die verschiedenen Glättungsverfahren reichen bis zum Hochglanzpolieren.

Die praktische Verwirklichung räumlich gekrümmter Schaufeln ist mit erheblichem Bearbeitungsaufwand verbunden. Dabei sind mehrere Arbeitsgänge notwendig. Es ist bekannt, eine räumlich gekrümmte Fläche zunächst mittels Fräsen zu bearbeiten und anschließend die geforderte Rauheit vollständig oder in Teilbereichen durch Schleifen zu erreichen.

Wasserturbinen und Wasserpumpen gehören einem technischen Gebiet an, das bereits verhältnismäßig alt ist. Die Möglichkeiten einer Weiterentwicklung sind sehr stark ausgeschöpft. Größere Wirkungsgradsteigerungen erscheinen kaum mehr möglich. Steigerungen in der Größenordnung von einigen Zehnteln Prozent gelten als hoch.

Der Erfindung liegt die Aufgabe zugrunde, ein Verfahren anzugeben, mit welchem Bauteile fuhr hydraulische Maschinen, insbesondere Schaufeln fuhr Wasserturbinen oder Wasserpumpen, derart gestaltet werden können, daß eine weitere Wirkungsgradsteigerung erzielt wird.

Diese Aufgabe wird durch die Merkmale von Anspruch 1 gelöst.

Der Kern der erfinderischen Lehre besteht in der Kombination einer Anzahl von Einzelmaßnahmen. Demgemäß wird nämlich ein solches spanabhebendes, umformendes, abtragendes oder zum Beschichten geeignetes Werkzeug zur Bearbeitung verwendet, das in der bearbeiteten Fläche streifenförmige Bearbeitungsspuren hinterläßt; weiterhin wird das Bearbeitungswerkzeug derart gefuhrt, daß die Bearbeitungsspuren beim fertigen Werkstück und beim Betrieb der Maschine entlang der Stromlinien verlaufen. Schließlich wird bewußt auf eine Nachbearbeitung verzichtet, so daß die Bearbeitungsspuren erhalten bleiben, jedenfalls auf einem wesentlichen Teil der strömungsführenden Flächen.

Der sich hieraus ergebende technische Fortschritt ist hoch. Dieser besteht beim Bearbeiten der Turbinenschaufeln nach dem erfindungsgemäßen Verfahren in einer wesentlichen Steigerung des Wirkungsgrades der Turbine. Die Steigerung liegt im Bereich von einigen Zehntel Prozent. Weiterhin liegt der Fortschritt in einer erheblichen Einsparung an Bearbeitungsaufwand.

Die Erfinder haben somit erkannt, daß eine Einsparung an Arbeitsaufwand zu einer Verbesserung des technologischen Ergebnisses fuhrt. Die genannten, erfindungsgemäßen Maßnahmen sind deshalb ungewöhnlich, weil nach bisheriger Auffassung die Rauheit so gering wie möglich ein sollte, und zwar nicht nur aus Gründen des wirkunsgrades sondern auch im Hinblick auf die Kavitationsgefahr und auch in schwingungsgefährdeten Bereichen.

Es ist aus dem Flugzeugbau bekannt, die Außenhaut von Flugzeugen mit U- oder V-förmigen profilierten Folien, sogenannten Riblets, zu beschichten. Jedoch liegen die Verhältnisse bei Wasserturbinen anders und verlangen besondere Maßnahmen, so wie in Anspruch 1 definiert. Das spanabhebende, umformende oder beschichtende Werkzeug ist bei einer Turbinenschaufel gemäß der Erfindung nämlich derart zu führen, daß sich jede einzelne Bearbeitungsspur über die gesamte bearbeitete Fläche hinweg entlang der Stromlinien zu führen, so daß eine Vielzahl von Mikro-Rippen gebildet wird (sogenannte Riblets), die entsprechende Mikro-Kanäle zwischen sich bilden.

Es gibt zahlreiche Verfahren, um die Erfindung zu verwirklichen.

Ein klassisches, spanendes Verfahren ist das Fräsen. Dabei wird ein dreiachsiges Fräsverfahren mit kugelförmigen Fräsern bei genau definiertem Fräsbahnabstand angewendet, um einen Abstand zwischen zwei benachbarten Riblets entsprechend der angestrebten Wirkungsgradsteigerung zu erreichen. Außerdem ist nunmehr auf die Richtung der Bearbeitungsriefen zu achten, die derart verlaufen soll, daß sie der Strömung der Turbinenschaufel beim Betrieb der Maschine entspricht.

Als weiteres Verfahren kommt das fünfachsige Umfangsfräsen mit zylindrischen oder profilierten Fräsern in Betracht. Die erwünschten Bearbeitungsriefen lassen sich auch durch andere spanende Fertigungsverfahren, z. B. durch Spanen mit geometrisch bestimmten Schneiden, durch Spanen mit geometrisch unbestimmten Schneiden, wie Umfangsschleifen mit zylindrischen oder profilierten Schleifscheiben, Bandschleifen oder Strahlspanen aufgebracht werden. Dabei wird Körnung und Schleifrichtung so ausgewählt, daß die Schleifriefen die gewünschte Form erhalten und die Richtung gezielt in Strömungsrichtung verläuft. Weitere Bearbeitungsverfahren sind Fertigungsverfahren zum thermischen, chemischen oder elektrochemischen Abtragen, wie Laser-Gravieren und Funkenerosions-Verfahren. Bei den abtragenden Verfahren kann die gewünschte Oberflächenstruktur auch durch profilierte Werkzeuge aufgebracht werden. Ebenso lassen sich umformende Bearbeitungsverfahren (z. B. Walzen oder Drücken) anwenden.

Eine weitere Möglichkeit besteht darin, eine Schaufel mit einer Folie oder mit einem Beschichtungsstoff zu beschichten, wobei die Folie entsprechend der Erfindung gestaltet ist und die demgemäß Riblets aufweist, die sich entsprechend der Stromlinien erstrecken. Die Bearbeitung der Schaufel vor dem Aufbringen der Beschichtung kann mit relativ keinem Aufwand vorgenommen werden, da ja die strömungsführende Fläche von der Folie gebildet wird. Das Verhalten der Beschichtung kann hinsichtlich Korrosion, Kavitation und Erosion optimiert werden.

Im Falle des Verwendens einer Folie, aber auch generell, können die strömungsführenden Flächen der betreffenden Bauteile mit einem erosions-, korrosions- oder kavitationsbeständigem Material beschichtet werden. In Betracht kommt beispielsweise eine Hartmetallbeschichtung und als Auftragsverfahren ein Hochgeschwindigkeits-Flammspritzen oder ein Beschichten mit elastischem Material, wie Polyurethanen, die mit konventionellen Verfahren gespritzt werden können. Das erfindungsgemäße Verfahren läßt sich hier während des Aufbringen oder danach durch die oben genannten Verfahren anwenden.

Bei Wasserturbinen oder Wasserpumpen kommen die folgenden Bauteile zur Bearbeitung entsprechend dem erfindungsgemäßen Verfahren in Betracht: Alle strömungsführenden Bauteile, wie Traversen, Leitschaufeln, Laufschaufeln, Pelton-Düsen und alle Kanäle, wie Saugrohre, Spiralen, aber auch die durchströmten Flächen, so bei Kaplanturbinen zwischen Nabe und äußerem Laufradring, sowie bei Francis-Turbinen und Boden und Kranz.

Die Erfindung ist anhand der Zeichnung näher erläutert. Darin ist im einzelnen folgendes dargestellt:
- Fig. 1: zeigt in schematischer Darstellung eine hydraulische Anlage mit einer Kaplanturbine.
- Fig. 2: zeigt in vergrößerter Darstellung die Nabe der Turbine mit einer Laufschaufel.

Die Figuren 3 bis 7 zeigen in stark vergrößerter Darstellung mögliche Profile von Bearbeitungsspuren.

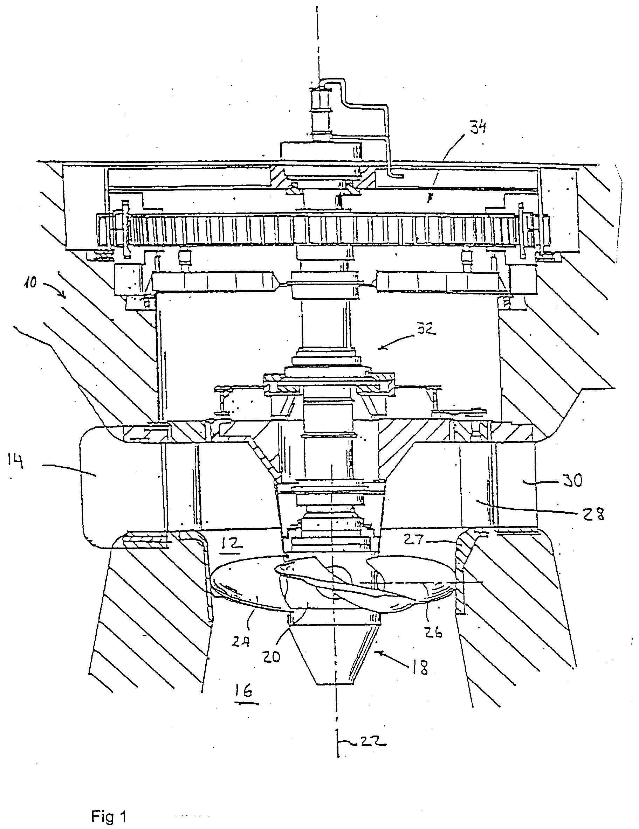

Die in Figur 1 dargestellte hydraulische Anlage 10 umfaßt einen Strömungskanal 12, in dem Wasser von einem oberen Niveau zum stromaufwärtigen Ende der Anlage 10 fließt und zu einem stromabwärtigen Abgabebereich 16 gelangt. Die Anlage 10 umfaßt eine Turbine 18 mit einer Nabe 20, die eine Längsachse 22 aufweist, ferner eine Mehrzahl von Laufschaufeln 24, die verstellbar an der Nabe 20 angeordnet sind. Jede Schaufel 24 ist um eine Drehachse 26 verdrehbar, die sich im wesentlichen senkrecht zur Längsachse 22 erstreckt. Die Turbine 18 ist im vorliegenden Falle vertikal dargestellt. Die Erfindung ist jedoch auch anwendbar auf Turbinen, deren Längsachse um einen Winkel gegen die Vertikale geneigt ist, beispielsweise mit einer horizontalen Längsachse, je nach Gestaltung des Strömungskanales 12. Außerdem können die Drehachsen 26 relativ zur Längsachse 22 auch geneigt sein, somit nicht unbedingt senkrecht zur Längsachse verlaufen.

Zwischen dem stromaufwärtigen Ende 14 und der Drehachse 26 befindet sich ein äußerer Laufradring 27, der den Wasserstrom vom stromaufwärtigen Ende 14 zur Turbine 18 lenkt. Die Anlage 10 umfaßt zahlreiche Leitschaufeln 28, die verdrehbar sind, um die zum Strömungskanal 12 geleitete Wasserströmung zu richten, ferner feststehende Schaufeln 30, die dazu dienen, den oberhalb von Turbine 18 befindlichen Teil der Anlage 10 zu tragen, nämlich ein Drucklager 32, ein Generator 34, ein zugeordnetes Steuersystem sowie Bauteile, die üblicherweise im Kraftwerk angeordnet sind und von denen einige ganz allgemein als Regler bezeichnet werden.

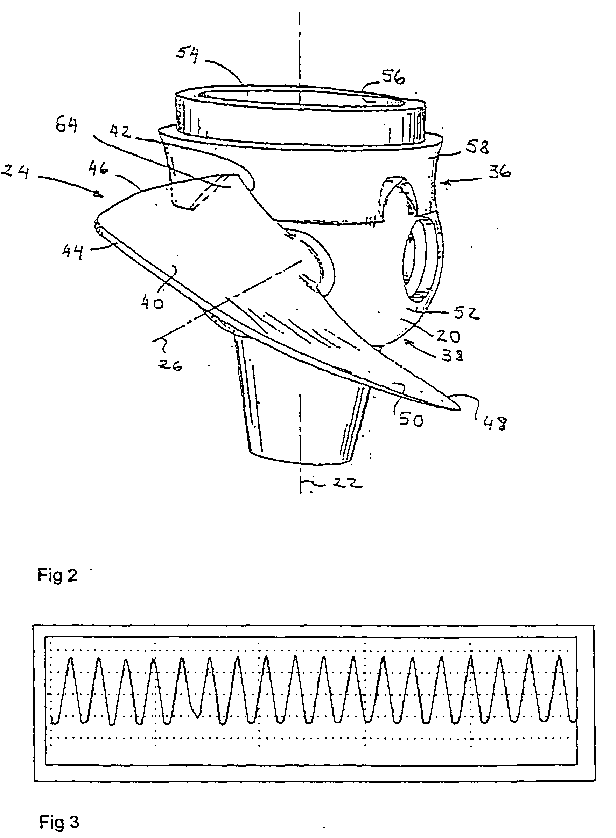

Wie man aus Figur 2 erkennt, ist die Laufschaufel 24 der Turbine 18 räumlich gekrümmt.

Mögliche Riblet-Profile sind in Fig. 3 bis 7 aufgeführt. Fig. 3 zeigt eine Folie als V-förmiges, symmetrisches Ribletprofil.

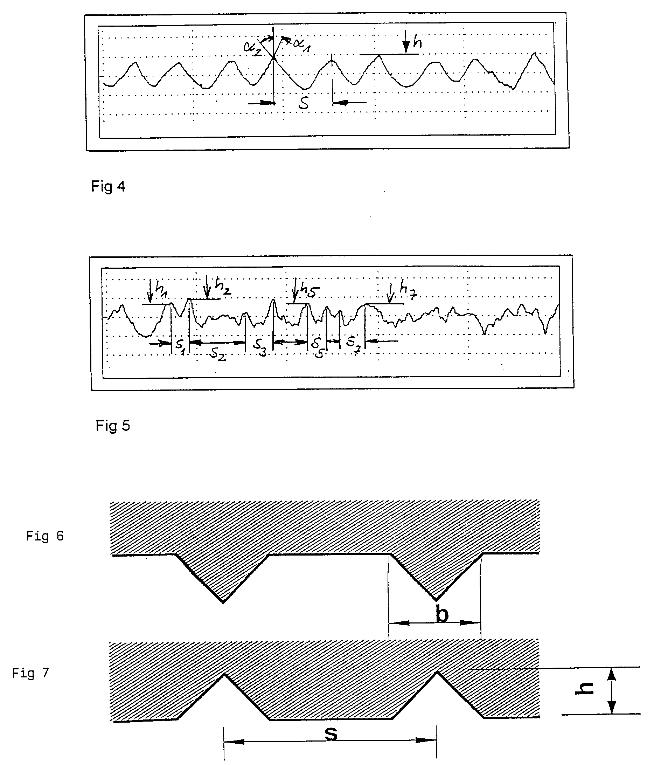

Fig. 4 zeigt ein durch Fräsen erzeugtes U-förmiges, ist unsymmetrisches Riblet-Profil (Winkel α₁ ist ungleich Winkel α₂). Bei beiden Profilen sind Abstand s und Höhe h der einzelnen Riblets im Rahmen der Fertigungsgenauigkeit konstant. Fertigungstechnisch, konstruktiv oder hydraulisch bedingt können Form, Abstand und Höhe der einzelnen Riblets variieren.

Fig. 5 zeigt durch Schleifen erzeugte stochastische Ribletprofile, bei denen die Ribletform, die Ribletabstände s und die Riblethöhen h in vorgegebenem Rahmen zufällig verteilt sind.

Der Abstand der einzelnen Riblets s kann größer als die Ribletbreite b sein - s. a. Fig. 6 und Fig. 7. Die Riblets können entweder positiv oder negativ aufgebracht sein. Fig. 6 zeigt ein V-förmiges Ribletprofil mit großem seitlichen Abstand s. Fig. 7 zeigt das zu Fig. 6 entsprechende negative Ribletprofil. Die Höhe der Riblets h bewegt sich üblicherweise im Bereich zwischen 0,005 mm und mehreren Millimetern. Der seitliche Abstand s bewegt sich üblicherweise im Bereich zwischen 0,01 mm und mehreren Millimetern. Das Höhenverhältnis h/b bewegt sich üblicherweise im Bereich 0,1 bis ca. 2. Alle angegebenen Grenzwerte können überschritten werden. Vorzugsweise entspricht die Ribletlänge l der gesamten Länge des Strömungsprofils. Bedingt durch die jeweiligen Bearbeitungsverfahren kann jedoch in Strömungsrichtung auch eine Ribletlänge l wesentlich kleiner als die Gesamtlänge des Strömungsprofils sinnvoll sein, bis ca. zum doppelten Ribletabstand s.

Die in den Figuren 3 bis 7 gezeigten Profile von Bearbeitungsspuren sind nur Beispiele. Weitere Formen sind denkbar. Es kann zweckmäßig sein, einerseits die Erfindung zwar anzuwenden für einen Teil der strömungsführenden Fläche einer Turbinen- oder Pumpenschaufel, dabei aber gewisse Bereiche in klassischer Weise nachzubearbeiten, beispielsweise durch Schleifen und Polieren. Derartige nachzubearbeitende Bereiche werden im allgemeinen der Eintrittskantenbereich 46 oder der Austrittskantenbereich 48 in Fig. 2 oder allgemein kavitationsgefährdete Bereiche oder Bereiche erhöhter Spannungskonzentrationen sein. Da diese nachzubearbeitenden Bereiche meist klein sind, ist der Aufwand hierfür entsprechend gering, so daß der technische Fortschritt der Erfindung dennoch erzielt wird.

## Patentansprüche

1. Verfahren zum Herstellen eines Bauteiles für eine hydraulische Strömungsmaschine, z. B. einer Schaufel für eine Turbine;
1.1 wobei eine strömungsführende Fläche durch spanabhebende Formgebung, durch Abtragen, durch umformende Fertigungsverfahren oder durch Beschichten bearbeitet wird;
1.2 wobei ein Werkzeug verwendet wird, das in der bearbeiteten Fläche streifenförmige Bearbeitungsspuren (sogenannte Riblets) hinterläßt;
1.3 wobei die Riblets durch eine der folgenden Bearbeitungsverfahren hergestellt werden: Fräsen, Bürstspanen, Schleifen, Bandschleifen, Walzen, Drücken, Beschichten und Verfahren zum thermischen, chemischen und elektrochemischen Abtragen, wie Funkenerosionsverfahren und Laser-Gravieren;
1.4 wobei das Bearbeitungswerkzeug derart geführt wird, daß die Bearbeitungsspuren entlang der Stromlinien verlaufen;
1.5 wobei wenigstens ein wesentlicher Teil der strömungsführenden Fläche frei von einer Nachbearbeitung bleibt.

2. Verfahren nach Anspruch 1, dadurch gekennzeichnet, daß ein Teil der strömungsführenden Fläche nachbearbeitet wird.

3. Verfahren zum Herstellen eines Bauteiles für eine hydraulische Maschine, z. B. einer Schaufel für eine Wasserturbine;
3.1 wobei eine strömungsführende Fläche aus einer Kunststoffolie oder mit anderen beschichtenden Verfahren gebildet wird;
3.2 wobei die strömungsführende Fläche sogenannte Riblets aufweist;
3.3 wobei die Riblets entlang der Stromlinien verlaufen.

4. Verfahren nach einem der Ansprüche 1 bis 3, dadurch gekennzeichnet, daß sich die Riblets in Richtung der Stromlinien gesehen und über die gesamte strömungsführende Fläche hinweg oder nur in Teilbereichen erstrecken.

5. Verfahren nach einem der Ansprüche 1 bis 4, dadurch gekennzeichnet, daß die Riblets auf ihrem Verlauf über die strömungsführende Fläche divergieren oder konvergieren.

6. Verfahren nach einem der Ansprüche 1 bis 5, dadurch gekennzeichnet, daß die strömungsführende Fläche mit einer Schicht, z. B. einer Hartmetallschicht, überzogen wird, so daß die Schicht im Betrieb der Maschine strömungsberührt ist.

7. Bauteil für eine hydraulische Maschine, z. B. Schaufel für eine Wasserturbine oder einer Wasserpumpe, dadurch gekennzeichnet, daß das Baute gemäß einem Verfahren nach einem der Ansprüche 1 bis 6 hergestellt ist.
